Europäisches Patentamt

European Patent Office

Office européen des brevets

(19)

(11) Veröffentlichungsnummer: **0 074 332**
**A2**

(12) # EUROPÄISCHE PATENTANMELDUNG

(21) Anmeldenummer: 82810335.8

(22) Anmeldetag: 09.08.82

(51) Int. Cl.³: **B 23 B 31/30**

(30) Priorität: 11.09.81 CH 5915/81

(43) Veröffentlichungstag der Anmeldung:
16.03.83 Patentblatt 83/11

(84) Benannte Vertragsstaaten:
AT BE CH DE FR GB IT LI LU NL SE

(71) Anmelder: Dieter Hansen AG
Ebnaterstrasse
CH-9630 Wattwil(CH)

(72) Erfinder: Lohse, Siegfried

CH-9630 Wattwil(CH)

(74) Vertreter: Schmid, Rudolf et al,
c/o ISLER & SCHMID Patentanwaltsbureau
Walchestrasse 23
CH-8006 Zürich(CH)

(54) Dehnspannvorrichtung.

(57) Bei der Dehnspannvorrichtung zum lösbaren Verbinden zweier Teile handelt es sich z. B. um ein Dehnspannfutter oder einen Dehnspanndorn für eine Werkzeugmaschine. Die Vorrichtung weist einen Grundkörper (2) auf und ein koaxial zu diesem angeordnetes Spannelement (4). Zwischen dem Grundkörper (2) und dem Spannelement (4) befinden sich zwei im Abstand voneinander angeordnete, durch ein Druckmedium beaufschlagbare Ringräume (5). Das Spannelement (4) ist im Bereich der Ringräume (5) mit je einer flexiblen, ringförmigen Spannlippe (6) versehen, die unter der Einwirkung des Druckmediums radial ausbiegbar ist. Durch die Vorrichtung wird eine präzise Einspannung auch bei kurzen Einbaulängen erzielt. Das Spannelement kann eine separate Hülse sein oder auch einstückig mit dem Grundkörper ausgebildet sein, wobei im letzteren Fall die Fertigungs- und Toleranzverhältnisse besonders vorteilhaft sind.

Fig. 1

Dieter Hansen AG

9630   Wattwil

Dehnspannvorrichtung

Die Erfindung betrifft eine Dehnspannvorrichtung gemäss dem Oberbegriff des Patentanspruches 1.

Dehnspannvorrichtungen dieser Art zum lösbaren Befestigen eines Spannfutters auf die Arbeitswelle einer Werkzeugmaschine sind aus der DE-PS 743.530 und der US-PS 1.818.042 bekannt. Die Vorrichtung gemäss der deutschen Patentschrift weist eine zweiteilige Spannhülse auf, die aus einem Innenteil und einem Aussenteil besteht, deren Enden miteinander dicht verschweisst sind. Zwischen dem Innenteil und dem Aussenteil befindet sich ein zylindrischer Druckraum zur Aufnahme eines Druckmediums, z. B. Hydrauliköl. Sowohl die innere als auch die äussere Mantelfläche der Spannhülse dehnen sich unter der Einwirkung des Druckmediums in radialer Richtung aus und verspannen das Spannfutter und die Arbeitswelle miteinander.

Die Beanspruchungsverhältnisse der Spannhülse sind ähnlich wie diejenigen bei einem beidseitig eingespannten Träger. Die den Auswölbungen entsprechenden Biegelinien sind für die Verspannung ungünstig, die die grösste Spannkraft in der Mitte der Hülse entsteht, was zu einem schlechten Rundlauf und evtl. auch zu einem Schlag führen kann.

Infolge des mehrteiligen Aufbaus der bekannten Hülse ist die Fertigung aufwendig. Durch die Ueberlagerung von Einzeltoleranzen beim Zusammenbau entsteht ein relativ grosser Toleranzbereich, der durch die Dehnung der Mantelflächen der Spannhülse überwunden werden muss. Unter Umständen können sich diese Flächen überdehnen und bleibend verformen. Schliesslich sei noch erwähnt, dass die Spannhülse separate Entlüftungselemente benötigt, wodurch die Herstellung verteuert wird.

Bei der Vorrichtung gemäss der US-PS 1.818.042 umfasst die Spannhülse einen dünnwandigen Mantel, der auf einem hohlen Schaftstumpf aufgeschoben und an den Enden mit diesem stumpf verschweisst ist. Zwischen der Aussenfläche des Schaftstumpfes und der Innenfläche des Mantels befindet sich der Hohlraum mit dem Druckmedium. Auch hier sind die Spannverhältnisse ungünstig.

Eine weitere bekannte, im wesentlichen mit den gleichen Nachteilen behaftete Spannvorrichtung besteht wiederum aus einem zylindrischen Grundkörper, auf welchem ein dehnbarer Mantel aufgeschoben ist. Die Abdichtung an den Enden erfolgt mittels O-Ringen. Der Mantel ist in gespanntem Zustand "schwimmend" gelagert. Für die Drehmomentübertragung werden Feder-/Nutanordnungen oder ähnliche Mittel benötigt, was einen zusätzlichen Fertigungsaufwand erfordert.

Aufgabe der Erfindung ist es nun, eine Dehnspannvorrichtung zu schaffen, bei welcher die Nachteile der bekannten Vorrichtungen vermieden werden. Die Lösung dieser
Aufgabe erfolgt erfindungsgemäss durch die in der Kennzeichnung des Patentanspruches 1 definierten Merkmale.

Anhand der Zeichnungen werden nachfolgend Ausführungsbeispiele der Erfindung näher erläutert. Es zeigen:

Fig. 1    einen Längsschnitt durch eine erste Ausführungsform eines Dehnspannfutters und

Fig. 2    einen Längsschnitt durch eine zweite Ausführungsform eines Dehnspannfutters.

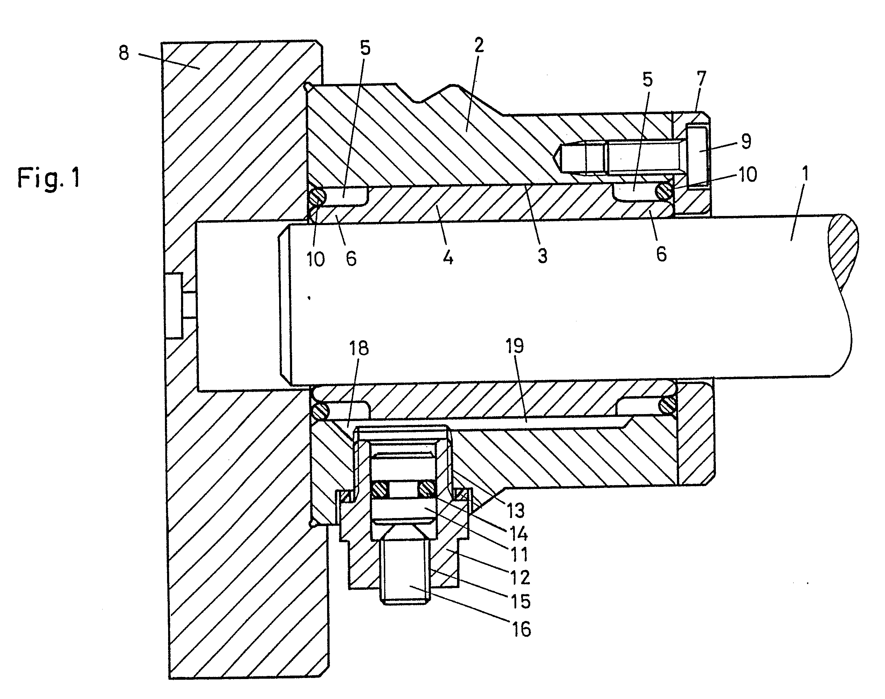

Wie aus der Figur 1 hervorgeht, ist der Wellenzapfen 1 oder der Schaft eines nicht näher dargestellten Werkzeuges im
Dehnspannfutter einer Werkzeugmaschine eingespannt. Das
Spannfutter weist einen Grundkörper 2 auf, in dessen Innenbohrung 3 ein                hohlzylindrisches Spannelement
4 angeordnet ist. Der Aussenmantel des Spannelementes 4
weist an beiden Enden je eine eingedrehte Vertiefung 5 auf.
Dadurch entstehen zwischen dem Grundkörper 2 und dem Spannelement 4 zwei Ringräume 5, in die ein Druckmedium einführbar ist.

Durch die Restquerschnitte in den Endzonen des Spannelementes 4 werden zwei flexible Spannlippen 6 gebildet. Diese beiden ringförmigen Spannlippen, die im Abstand voneinander angeordnet sind, halten den Wellenzapfen 1 präzise und starr.

Am Grundkörper 2 sind zwei Ringflansche 7, 8 mittels Schrauben befestigt. Zur besseren Uebersicht ist auf der Zeichnung nur eine Schraube 9 dargestellt. Die Abdichtung der Ringräume 5 nach aussen erfolgt mittels zweier O-Ringe 10, die an den Flanschflächen anliegen. Das Spannfutter ist über den Grundkörper 2 und den zweiten Flansch 8 in nicht näher dargestellter Weise mit der Werkzeugmaschine verbunden.

Zur Erzeugung des Spanndruckes ist ein schraubenbetätigter Druckkolben 11 vorgesehen. Dieser ist in einem Einsatzteil 12 untergebracht, welcher seinerseits in eine radiale Gewindebohrung 13 im Grundkörper 2 eingeschraubt und durch einen Dichtring abgedichtet ist. Der Einsatzteil 12 ist ebenfalls mit einer radialen Gewindebohrung 15 versehen zur Aufnahme der Betätigungsschraube 16, durch welche der Kolben 11 verschoben werden kann. Zur Abdichtung des Kolbens 11 dient der O-Ring 14.

Das Druckmedium, im vorliegenden Fall ein Hydrauliköl, gelangt über den Kanal 18 und eine oder mehrere
axiale Rillen 19 in der Innenwandung des Grundkörpers 2
in die Ringräume 5. Durch den Hydraulikdruck werden die
Lippen elastisch radial nach innen gespannt und gegen die
Oberfläche des Wellenzapfens 1 gepresst.

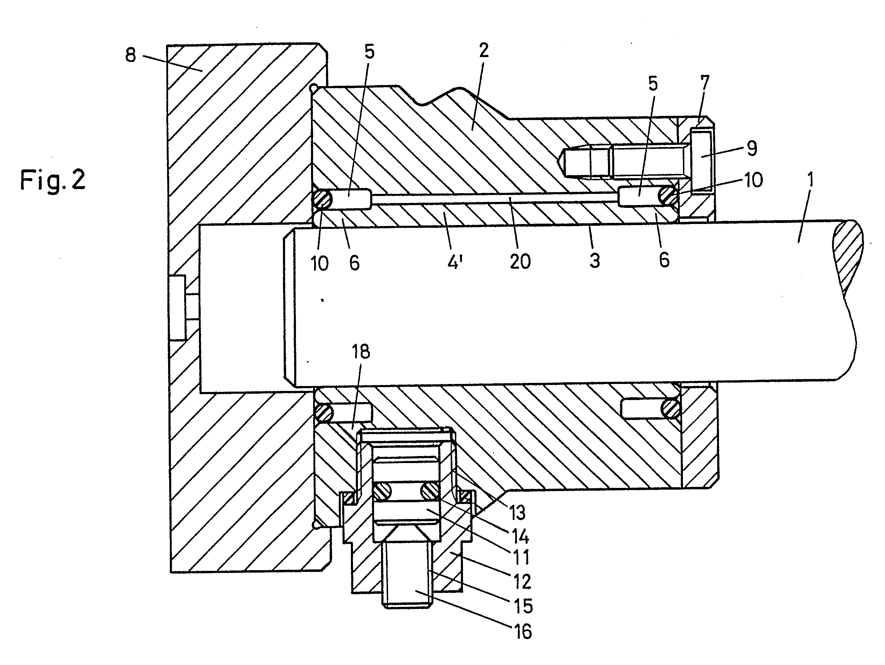

Das zweite Ausführungsbeispiel der Erfindung
gemäss Figur 2 unterscheidet sich vom ersten dadurch, dass
das Spannelement 4' und der Grundkörper 2 einstückig miteinander ausgebildet sind, was fertigungstechnische Vorteile bringt und die Toleranzverhältnisse verbessert.
Stirnseitig sind am Grundkörper 2 zwei Eindrehungen angeordnet, die die Ringräume 5 bilden. Die dem Wellenschaft
zugekehrten Wände der Eindrehung sind zugleich die Spannlippen 6. Die Ringräume 5 sind durch einen Verbindungskanal 20 miteinander verbunden.

Die beschriebene Vorrichtung weist folgende Vorteile auf:

- Jede Spannlippe ist nur einseitig eingespannt. Dadurch kann keine ungünstige Beanspruchung entstehen wie bei der beidseitig eingespannten Hülse der in
der Beschreibungseinleitung erwähnten bekannten Vorrichtung.
Auch werden bei der Spannung keine ungünstigen Biegelinien
gebildet.

- Beim Ausführungsbeispiel gemäss der Figur 2
ist das Spannelement mit dem Grundkörper einstückig ausgebildet, was die Fertigung vereinfacht und bessere Toleranzverhältnisse schafft.

- Auch bei axial beschränkten Platzverhältnissen ist eine grosse Einspannlänge möglich.

- Infolge der beiden symmetrisch angeordneten, relativ weit auseinanderliegenden Spannstellen wird
eine sehr präzise Einspannung gewährleistet bei hoher
Festigkeit des Sitzes und einwandfreiem Rundlauf des Schaftes.

- Es sind keine Zusatzkonstruktionen notwendig für die Drehmomentübertragung wie bei bekannten Vorrichtungen mit aufgeschobenen Hülsen.

- Statt eines einzelnen durchgehenden Ringraumes mit grosser axialer Länge wie bei den bekannten Vorrichtungen sind mehrere kurze Ringräume vorgesehen, die je
einer Spannlippe zugeordnet sind.

- Die Entlüftung ist sehr einfach und erfolgt
durch Lösen der Ringflansche. Es sind keine zusätzlichen
Elemente wie Ventile oder Stopfen notwendig.

Bei einer weiteren Ausführungsform der Erfindung
könnte die Vorrichtung auch als Dehnspanndorn ausgebildet
sein. Das Spannelement mit den Spannlippen wäre dann auf
dem Grundkörper aufgeschoben, und die Lippen würden sich
radial nach aussen biegen. Der Druckkolben könnte axial in
einem der Enden des Grundkörpers angeordnet sein. Auch beim
Dehnspanndorn ist eine einstückige Ausbildung des Grundkörpers mit dem Spannelement möglich. Die Spannlippen bilden
dann einen Teil der zylindrischen Aussenfläche des Spanndorns.

Obwohl für die meisten Anwendungsfälle der Dehnspannvorrichtung zwei Spannstellen zweckmässig sind, sind auch Ausgestaltungen der Erfindung denkbar mit einer einer einzigen Spannlippe oder auch mit mehr als zwei Spannlippen. Eine Vielzahl von Spannlippen ist insbesondere bei langen Einspannstellen vorteilhaft.

"Dehnspannvorrichtung"

Dieter Hansen AG

9630  Wattwil

P A T E N T A N S P R Ü C H E

1. Dehnspannvorrichtung zum lösbaren Verbinden zweier Teile, wobei die Vorrichtung einen Grundkörper und ein koaxial zu diesem angeordnetes Spannelement aufweist, und wobei zwischen dem Grundkörper und dem Spannelement mindestens ein durch ein Druckmedium beaufschlagbarer Ringraum vorhanden ist, dadurch gekennzeichnet, dass das Spannelement (4, 4') im Bereich des Ringraumes (5) als flexible, ringförmige Spannlippe (6) ausgebildet ist, die unter der Einwirkung des Druckmediums elastisch radial ausbiegbar ist.

2. Vorrichtung nach Anspruch 1, dadurch gekennzeichnet, dass das Spannelement (4) eine Hülse ist, die am Ende eine umlaufende, den Ringraum (5) darstellende Aussparung aufweist, und dass der Restquerschnitt des Spannelementes (4) im Bereich der Aussparung die flexible Spannlippe (6) bildet.

3. Vorrichtung nach Anspruch 1, dadurch gekennzeichnet, dass das Spannelement (4') und der Grundkörper (2) einstückig ausgebildet sind, und dass stirnseitig am Grundkörper (2) eine den Ringraum (5) bildende Eindrehung angebracht ist, wobei eine Wand dieser Eindrehung die Spannlippe (6) ist.

4. Vorrichtung nach Anspruch 1, dadurch gekennzeichnet, dass die Oeffnung des Ringraumes (5) mit einem Flansch (7) abgedeckt ist, der am Grundkörper (2) lösbar befestigt ist.

5. Vorrichtung nach Anspruch 4, dadurch gekennzeichnet, dass im Ringraum (5) ein an der Flanschfläche anliegender O-Ring (10) untergebracht ist.

6. Vorrichtung nach einem oder mehreren der Ansprüche 1 bis 5, dadurch gekennzeichnet, dass an beiden Enden der Vorrichtung Ringräume (5) vorgesehen sind, die durch je einen Flansch (7, 8) abgedeckt sind, und dass das Spannelement (4, 4') zwei im Abstand voneinander angeordnete Spannlippen (6) aufweist.

7. Vorrichtung nach Anspruch 2, dadurch gekennzeichnet, dass sie ein Dehnspannfutter oder ein Dehnspanndorn für eine Werkzeugmaschine ist, wobei im ersten Fall das Spannelement (4) in eine Bohrung (3) des Grundkörpers (2) eingeschoben ist und im zweiten Fall das Spannelement (4) auf dem zylindrischen Grundkörper (2) aufgeschoben ist.

8. Vorrichtung nach Anspruch 3, dadurch gekennzeichnet, dass sie ein Dehnspannfutter oder ein Dehnspanndorn ist, wobei die Lippe (6) teilweise die zylindrische Innenfläche des Spannfutters bzw. die zylindrische Aussenfläche des Spanndorns bildet.

Fig.1

Fig. 2